(19) **Europäisches Patentamt**

**European Patent Office**

**Office européen des brevets**

(11) **EP 0 638 518 B1**

(12) **EUROPÄISCHE PATENTSCHRIFT**

(45) Veröffentlichungstag und Bekanntmachung des Hinweises auf die Patenterteilung:
**06.05.1998 Patentblatt 1998/19**

(51) Int. Cl.⁶: $C01D\ 3/16$, $C01D\ 5/00$, $C25B\ 15/08$

(21) Anmeldenummer: **94108515.1**

(22) Anmeldetag: **03.06.1994**

(54) **Verfahren zur Elektrolyse einer wässrigen Kaliumchlorid-Lösung**

Process for the electrolysis of an aqueous solution of potassium chloride

Procédé pour l'électrolyse d'une solution aqueuse de chlorure de potassium

(84) Benannte Vertragsstaaten:
**BE DE ES FR GB IT SE**

(30) Priorität: **04.08.1993 DE 4326128**

(43) Veröffentlichungstag der Anmeldung:
**15.02.1995 Patentblatt 1995/07**

(73) Patentinhaber:
**HÜLS AKTIENGESELLSCHAFT**
**45764 Marl (DE)**

(72) Erfinder:
- **Hönigschmid-Grossich, Rüdiger, Dr.**
  **D-53859 Niederkassel (DE)**
- **Schmittinger, Peter, Dr.**
  **D-53859 Niederkassel (DE)**
- **Stahl, Ingo, Dr.**
  **D-34246 Vellmar (DE)**
- **Wambach-Sommerhoff, Karl-Rainer, Dr.**
  **D-36251 Bad Hersfeld (DE)**

(56) Entgegenhaltungen:
**DE-A- 1 209 562**        **DE-A- 3 805 266**
**US-A- 3 941 667**

EP 0 638 518 B1

**Beschreibung**

Die Erfindung betrifft ein Verfahren zur Elektrolyse einer wäßrigen Kaliumchlorid-Lösung.

Bei der Elektrolyse von Kaliumchlorid wird eine wäßrige Kaliumchlorid-Lösung hoher Reinheit verwendet. Zur Herstellung der Kaliumchlorid-Lösung wird Kaliumchlorid-Salz in Wasser aufgelöst, wobei man die sogenannte Rohsole erhält, die anschließend gereinigt wird. Die durch das eingesetzte Kaliumchlorid-Salz in die Rohsole eingebrachten Verunreinigungen, wie Calcium-, Magnesium-, Eisen- und Sulfat-Ionen, werden in Fällungs- und Filtrierprozessen entfernt. Dabei werden die Fällreagenzien als Lösungen dem Rohsolehauptstrom oder einem Teilstrom entweder vor oder unmittelbar nach dem Sättigungsprozeß zugegeben. Magnesium und Eisen werden mittels Kalilaugezugabe als Hydroxide und Calcium durch Zugabe von Kaliumcarbonat als Calciumcarbonat gefällt.

Da erhöhte Sulfat-Ionen-Konzentrationen (> 10 g $SO_4^{2-}$/l) im Elektrolyseprozeß zu einem Anstieg der Sauerstoffkonzentration im Chlor führen, kommt der Entfernung der Sulfat-Ionen aus der Rohsole besondere Bedeutung zu.

Es ist bekannt, die Sulfat-Ionen aus der Rohsole, z. B. durch fällung als $CaSO_4$ bzw. $CaSO_4 \times 2\,H_2O$ zu entfernen. Gemäß DE-PS 12 09 562 werden aus einer Alkalichloridsole durch Zugabe von CaO bzw. $Ca(OH)_2$ und Soda in einem 2-Stufenverfahren Magnesium als Magnesiumhydroxid, die Sulfat-Ionen als $CaSO_4$ und die Restverunreinigungen als Carbonate gefällt.

DE-PS 38 05 266 lehrt ein Verfahren zur Sulfatentfernung aus Alkalichloridsole, wobei die Sulfat-Ionen in einem Teilstrom durch Zugabe einer CaO-Suspension bei einem pH-Wert von 2 - 9 als $CaSO_4 \times 2\,H_2O$ ausgefällt werden.

Allerdings ist bei der Entfernung der Sulfat-Ionen als $CaSO_4$ bzw. $CaSO_4 \times 2\,H_2O$ der zusätzliche Einsatz von Fällchemikalien ($CaCl_2$, $Ca(OH)_2$) nötig; die Menge an nicht verwertbarem, zu deponierendem Abfallschlamm wird vergrößert. Auch wird die Konzentration an $Ca^{++}$-Ionen erhöht, welche den Elektrolyseprozeß stören.

Ein sehr häufig angewandtes Verfahren zur Entfernung der Sulfat-Ionen aus der Rohsole ist die Fällung als Bariumsulfat mit Bariumchlorid oder Bariumcarbonat als Fällungsmittel (siehe Ullmanns Encyklopädie der technischen Chemie, Band 9, 4. Auflage, S. 339). Dieses Verfahren weist aber die folgenden Nachteile auf:

- Die Bariumsalze $BaCl_2$ bzw. $BaCO_3$ sind giftig, so daß der Umgang mit ihnen besondere Schutzmaßnahmen erfordert.
- Bariumsalze sind teuer.
- Der abfiltrierte Filterschlamm enthält neben Bariumsulfat noch Reste von ungelöstem Bariumchlorid bzw. -carbonat.

- Beim unvermeidlichen Schlupf von Bariumionen durch den Filtrationsprozeß bilden sich $BaSO_4$-Niederschläge auf den aktivierten Titananoden. Diese Niederschläge führen zu einer Erhöhung der Zellenspannung und somit zu erhöhten Stromkosten. Außerdem wird die Lebensdauer der Titananoden verkürzt, was erhöhte Reaktivierungskosten nach sich zieht.

Der Erfindung liegt die Aufgabe zugrunde, ein Verfahren zur Elektrolyse einer wäßrigen Kaliumchlorid-Lösung zu entwickeln, bei dem die Sulfat-Ionen aus der Kaliumchlorid-Lösung auf besonders wirtschaftliche und umweltfreundliche Weise entfernt werden.

Es wurde nun überraschenderweise gefunden, daß sich die Sulfat-Ionen aus der wäßrigen Kaliumchlorid-Lösung durch Fällung als Kaliumsulfat und/oder als Kaliumsulfat-haltiges Salzgemisch und/oder als Kaliumsulfat-haltige Verbindung auf besonders wirtschaftliche und umweltfreundliche Weise entfernen lassen.

Gegenstand der vorliegenden Erfindung ist daher ein Verfahren zur Elektrolyse einer wäßrigen Kaliumchlorid-Lösung, das dadurch gekennzeichnet ist, daß die Sulfat-Ionen aus der wäßrigen Kaliumchlorid-Lösung durch Fällung als Kaliumsulfat und/oder als Kaliumsulfat-haltiges Salzgemisch und/oder als Kaliumsulfat-haltige Verbindung entfernt werden, wobei die Sulfat-Ionen durch Erhöhung der Hydroxid-Ionen-und/oder Carbonat-Ionen-Konzentration oder durch Erhöhung der Hydrogencarbonat-Ionen-Konzentration oder der Hydrogencarbonat-Ionen- und Carbonat-Ionen-Konzentration entfernt werden.

Vorzugsweise werden die Sulfat-Ionen aus der wäßrigen Kaliumchlorid-Lösung durch Zugabe von Kaliumhydroxid und/oder Kaliumcarbonat entfernt. Kaliumhydroxid und Kaliumcarbonat können sowohl in fester Form wie auch als wäßrige Lösung zur wäßrigen Kaliumchlorid-Lösung zugegeben werden, bevorzugt ist die Zugabe als wäßrige Lösung. Vorzugsweise beträgt das Mengenverhältnis von dem in der Lösung enthaltenen Kaliumchlorid zu dem zuzusetzenden Kaliumhydroxid 8 : 1 bis 2 : 1, besonders vorzugsweise 4 : 1 bis 2,5 : 1.

Für die Zugabe von Kaliumcarbonat beträgt vorzugsweise das Mengenverhältnis von dem in der Lösung enthaltenen Kaliumchlorid zu dem zuzusetzenden Kaliumcarbonat 2,5 : 1 bis 5 : 1, besonders vorzugsweise 3 : 1 bis 4,5 : 1.

Alternativ werden die Sulfat-Ionen aus der wäßrigen Kaliumchlorid-Lösung vorzugsweise durch Zugabe von Kaliumhydrogencarbonat oder von einem Gemisch aus Kaliumhydrogencarbonat und Kaliumcarbonat entfernt. Kaliumhydrogencarbonat bzw. im Gemisch mit Kaliumcarbonat können sowohl in fester Form wie auch als wäßrige Lösung zur wäßrigen Kaliumchlorid-Lösung zugegeben werden, bevorzugt ist die Zugabe in fester Form.

Es kann die Fällung des Kaliumsulfats und/oder Kaliumsulfat-haltigen Salzgemisches und/oder der Kaliumsulfat-haltigen Verbindung auch durch Zugabe noch zusätzlicher Fällungsmittel unterstützt werden. Geeigneterweise kann als noch zusätzliches Fällungsmittel Calciumchlorid zugegeben werden.

Es ist vorteilhaft, daß bei der Fällung Kaliumsulfat-Impfkristalle zugesetzt werden. Das ausgefällte Kaliumsulfat und/oder das Kaliumsulfat-haltige Salzgemisch und/oder die Kaliumsulfat-haltige Verbindung scheidet sich in der Regel in kristalliner Form ab und läßt sich gut abfiltrieren. Die Temperatur der wäßrigen Kaliumchlorid-Lösung sollte geeigneterweise bei der Ausfällung von Kaliumsulfat und/oder des Kaliumsulfat-haltigen Salzgemisches und/oder der Kaliumsulfat-haltigen Verbindung über der Sättigungstemperatur von Kaliumchlorid liegen, damit nicht zuviel Kaliumchlorid mitgefällt wird.

Bei gleichem Mengenverhältnis von in der Lösung enthaltenem Kaliumchlorid zu zugegebenem Kaliumhydroxid nimmt mit steigender Fällungstemperatur die Reinheit des ausgefällten Kaliumsulfats zu, d. h. die Mitfällung von Kaliumchlorid geht zurück. Allerdings sinkt geringfügig die Ausbeute an ausgeschleustem Kaliumsulfat. Je höher die Fällungstemperatur eingestellt wird, um so kleiner sollte man das Mengenverhältnis von Kaliumchlorid zu Kaliumhydroxid wählen, damit gute Ausbeuten an ausgefälltem Kaliumsulfat erreicht werden.

Beim erfindungsgemäßen Verfahren kann die Elektrolyse von Kaliumchlorid nach dem Amalgam-Verfahren oder Diaphragmaverfahren oder Membranverfahren durchgeführt werden.

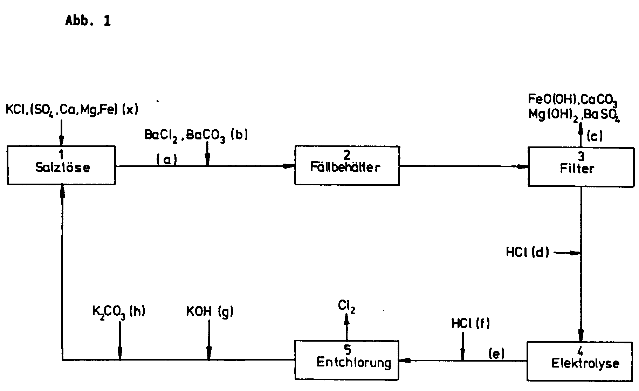

In Abbildung 1 ist beispielhaft der Kaliumchloridsole-Kreislauf einer Kaliumchlorid-Elektrolyse nach dem Amalgamverfahren gemäß dem Stand der Technik dargestellt:
In der Salzlöse (1) wird festes Kaliumchlorid (X) mit Calcium-, Magnesium-, Eisen- und Sulfat-Ionen als Verunreinigungen in Dünnsole oder Wasser aufgelöst, wobei man die sogenannte Rohsole (a) erhält. Die Rohsole (a) wird nun mit Bariumchlorid bzw. Bariumcarbonat (b) versetzt, und im Fällbehälter (2) werden die Verunreinigungen ausgefällt. Mit Hilfe eines Filters (3) wird nun der ausgefällte Niederschlag (c) aus Eisenhydroxid, Magnesiumhydroxid, Calciumcarbonat und Bariumsulfat abfiltriert, das Filtrat, die gereinigte Kaliumchloridsole, mit Salzsäure (d) versetzt und der Elektrolyse (4) zugeführt. Nach der Elektrolyse (4) erhält man die sogenannte Dünnsole (e), die mit Salzsäure (f) angesäuert und dann der Entchlorung (5) zugeleitet wird. Die entchlorte Dünnsole wird anschließend noch mit Kaliumhydroxid (g) und Kaliumcarbonat (h) versetzt und in die Salzlöse (1) zurückgeführt, so daß der Kaliumchloridsole-Kreislauf geschlossen ist. Es ist auch möglich, Kaliumhydroxid (g) und Kaliumcarbonat (h) der Rohsole (a) nach der Salzlöse (1) zuzusetzen.

Eine bevorzugte Variante des erfindungsgemäßen Verfahrens ist, daß die Sulfat-Ionen durch Fällung als Kaliumsulfat und/oder als Kaliumsulfathaltiges Salzgemisch und/oder als Kaliumsulfat-haltige Verbindung aus der Dünnsole entfernt werden. Unter Dünnsole wird die an Kaliumchlorid abgereicherte Kaliumchloridsole verstanden, die man nach der Elektrolyse erhält.

Besonders bevorzugt werden die Sulfat-Ionen aus einem Teilstrom der Dünnsole entfernt. Im erfindungsgemäßen Verfahren kann die für die Fällung der als Hydroxide fällbaren Ionen, z. B. Mg- und Fe-Ionen, erforderliche Menge an Kaliumhydroxid ganz oder teilweise einem Teilstrom der Dünnsole zugesetzt werden, aus welchem Kaliumsulfat abgetrennt wird.

So kann beispielsweise ein Teilstrom der Dünnsole mit einem Gehalt von ca. 20 bis 25 Gew.-% Kaliumchlorid und ca. 1,5 bis 2 Gew.-% Kaliumsulfat mit Kaliumhydroxid in fester oder gelöster Form, gegebenenfalls unter zusätzlicher Zugabe von Kaliumcarbonat, bei einer Fällungstemperatur von 30 bis 50 °C versetzt werden, wobei das Mengenverhältnis von Kaliumchlorid zu zugegebenem Kaliumhydroxid vorzugsweise 8 : 1 bis 2 : 1 beträgt. Unter langsamem Rühren, gegebenenfalls unter Zugabe von Kaliumsulfat-Kristallen als Kristallisationskeime, fällt das Kaliumsulfat aus, das abfiltriert wird. Das Filtrat, eine entsprechend alkalisierte Dünnsole, kann dem Hauptstrom der Dünnsole wieder geregelt zudosiert werden. Anschließend kann bei Bedarf der pH-Wert des Hauptstroms der Dünnsole durch weitere Kaliumhydroxidzugabe auf einen erforderlichen Wert von 8 bis 12,5 eingestellt werden.

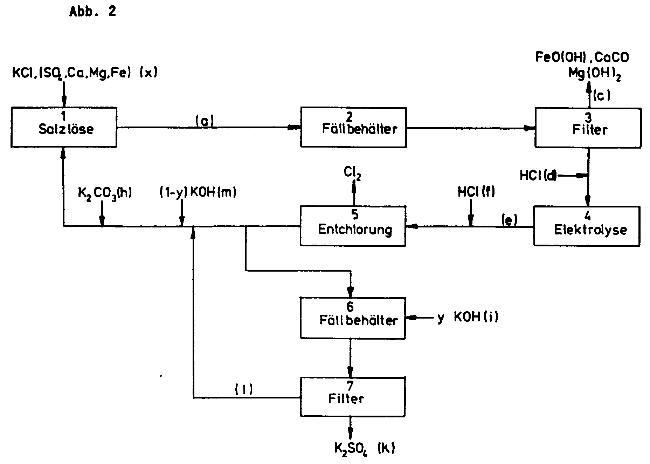

In Abbildung 2 ist beispielhaft der Kaliumchloridsole-Kreislauf einer Kaliumchlorid-Elektrolyse nach dem Amalgamverfahren dargestellt, wobei erfindungsgemäß die Sulfat-Ionen durch Fällung als Kaliumsulfat aus einem Teilstrom der Dünnsole entfernt werden:
Im Unterschied zu dem Verfahren gemäß dem Stand der Technik wird die Rohsole (a) weder mit Bariumchlorid noch mit Bariumcarbonat (b) versetzt, und der mit Hilfe des Filters (3) abfiltrierte Niederschlag (c) enthält somit auch kein Bariumsulfat. Im erfindungsgemäßen Verfahren wird nun nach der Entchlorung (5) ein Teilstrom der Dünnsole (e) vom Hauptstrom abgezweigt und in einem Fällbehälter (6) mit einer Teilmenge Y mit Y ≤ 1 der für die Fällung der als Hydroxide fällbaren Ionen, wie z. B. Mg- und Fe-Ionen, erforderlichen Menge an Kaliumhydroxid (i) versetzt. Das ausgefällte Kaliumsulfat (k) wird anschließend mit Hilfe eines Filters (7) abfiltriert und das Filtrat (l) wieder dem Hauptstrom der Dünnsole (e) zugegeben. Die Dünnsole (e) wird nun mit der für die Fällung der Hydroxide erforderlichen Restmenge (1-Y) an Kaliumhydroxid (m) sowie mit Kaliumcarbonat (h) versetzt und wieder in die Salzlöse (1) zurückgeführt, so daß der Kaliumchloridsole-Kreislauf geschlossen ist. Es ist auch möglich, die Restmenge (1-Y) an Kaliumhydroxid (m) sowie das Kaliumcarbonat (h) der Rohsole (a) nach der Salzlöse (1) zuzusetzen.

Mit Hilfe des erfindungsgemäßen Verfahrens lassen sich ohne weiteres bis zu ca. 80 % des ursprünglich im Teilstrom der Dünnsole enthaltenen Kaliumsulfats ausschleusen. Es kann in jedem Fall soviel an Kaliumsulfat ausgeschleust werden, wie durch den Rohstoff Kaliumchlorid in den Kaliumchloridsole-Kreislauf der Kaliumchlorid-Elektrolyse eingebracht wird.

Das erfindungsgemäße Verfahren weist die folgenden Vorteile gegenüber den Verfahren gemäß dem Stand der Technik auf:

- Es werden teure Fällungsmittel (z. B. Bariumsalze) eingespart.
- Der Umgang mit den giftigen Bariumsalzen wird vermieden.
- Die durchschnittlichen Zellenspannungen werden verringert und damit Stromkosten gespart.
- Die Anodenlaufzeiten verlängern sich.
- Die getrennte Ausschleusung von Kaliumsulfat ermöglicht dessen wirtschaftliche Verwertung. Das ausgefällte, kristallisierte Kaliumsulfat ist ein Wertstoff, der z. B. in der Düngemittelindustrie verwendet wird.
- Die Menge des anfallenden Filterschlamms verringert sich, was zu einer Einsparung an Deponiekosten führt.
- Der Filterschlamm ist frei von Bariumsalzen, was einen großen Beitrag zum Umweltschutz darstellt.

Die Erfindung wird durch die folgenden Beispiele näher erläutert:

Beispiel 1

1,5 m$^3$, entsprechend 1 741,9 kg, Kaliumchlorid-Dünnsole mit einem pH-Wert von 10,5 - 11 und mit einem KCl-Gehalt von 23,3 Gew.-% und einem $K_2SO_4$-Gehalt von 1,78 Gew.-% werden als Teilstrom vom Hauptstrom der Dünnsole aus der Kaliumchlorid-Elektrolyse abgezweigt und in einem Fällbehälter mit 242,8 kg 49,6 Gew.-%iger Kalilauge bei einer Temperatur von 50 °C versetzt. Das Mengenverhältnis KCl zu KOH beträgt 3,36 zu 1. Es wird nach Zugabe von $K_2SO_4$-Impfkristallen unter Rühren auf eine Fällungstemperatur von 35 °C abgekühlt und das ausgefallene $K_2SO_4$-Kristallisat abfiltriert, wobei eine Nachfällung im auf eine Temperatur von 29 °C sich abkühlenden Filtrat mit dem ersten $K_2SO_4$-Kristallisat vereinigt wird. Im erhaltenen Filtrat wird die eingesetzte Kalilaugemenge praktisch vollständig wiedergefunden. Das Filtrat wird dem Dünnsolehauptstrom wieder zugegeben.

Die Menge an $K_2SO_4$-Kristallisat beträgt 9,97 kg. Das Kristallisat ist wie folgt zusammengesetzt: 95,8 Gew.-% $K_2SO_4$, 1,3 Gew.-% KCl, Rest Wasser. Die Ausbeute von 9,55 kg $K_2SO_4$ entspricht 30,8 % der ursprünglich im Teilstrom der Dünnsole enthaltenen $K_2SO_4$-Menge.

Beispiel 1 demonstriert, daß sich das $K_2SO_4$ in sehr reiner Form aus der Dünnsole ausschleusen läßt.

Beispiel 2

1,5 m$^3$, entsprechend 1 753,3 kg, Kaliumchlorid-Dünnsole mit einem pH-Wert von 10,5 - 11 und mit einem KCl-Gehalt von 23,8 Gew.-% und einem $K_2SO_4$-Gehalt von 1,69 Gew.-% werden als Teilstrom vom Hauptstrom der Dünnsole aus der Kaliumchlorid-Elektrolyse abgezweigt und in einem Fällbehälter mit 310,7 kg 50 Gew.-%iger Kalilauge bei einer Temperatur von 50 °C versetzt. Das Mengenverhältnis KCl zu KOH beträgt 2,68 zu 1. Es wird nach Zugabe von $K_2SO_4$-Impfkristallen unter Rühren auf eine Fällungstemperatur von 32 °C abgekühlt und das ausgefallene $K_2SO_4$-Kristallisat abfiltriert, wobei eine Nachfällung im auf eine Temperatur von 29 °C sich abkühlenden Filtrat mit dem ersten $K_2SO_4$-Kristallisat vereinigt wird. Im erhaltenen Filtrat wird die eingesetzte Kalilaugemenge praktisch vollständig wiedergefunden. Das Filtrat wird dem Dünnsolehauptstrom wieder zugegeben.

Die Menge an $K_2SO_4$-Kristallisat beträgt 54,8 kg. Das Kristallisat ist wie folgt zusammengesetzt: 27,94 Gew.-% $K_2SO_4$, 67,07 Gew.-% KCl, Rest Wasser. Die Ausbeute von 15,31 kg $K_2SO_4$ entspricht 51,7 % der ursprünglich im Teilstrom der Dünnsole enthaltenen $K_2SO_4$-Menge.

Beispiel 2 demonstriert, daß sich das $K_2SO_4$ mit hoher Ausbeute aus der Dünnsole ausschleusen läßt.

Beispiel 3

1,5 m$^3$, entsprechend 1 740,6 kg, Kaliumchlorid-Dünnsole mit einem pH-Wert von 10,5 - 11 und mit einem KCl-Gehalt von 23,2 Gew.-% und einem $K_2SO_4$-Gehalt von 1,74 Gew.-% werden als Teilstrom vom Hauptstrom der Dünnsole aus der Kaliumchlorid-Elektrolyse abgezweigt und in einem Fällbehälter mit 303,1 kg 49,6 Gew.-%iger Kalilauge bei einer Temperatur von 50 °C versetzt. Das Mengenverhältnis KCl zu KOH beträgt 2,68 zu 1. Es wird nach Zugabe von $K_2SO_4$-Impfkristallen unter Rühren auf eine Fällungstemperatur von 37 °C abgekühlt und das ausgefallene $K_2SO_4$-Kristallisat abfiltriert. Im auf einer Temperatur von ca. 38 °C gehaltenen Filtrat kristallisiert nur eine geringe Menge Zweitkristallisat aus, das mit dem ersten $K_2SO_4$-Kristallisat vereinigt wird. Die eingesetzte Kalilaugemenge wird im erhaltenen Filtrat praktisch vollständig wiedergefunden. Das Filtrat wird dem Dünnsolehauptstrom wieder zugegeben.

Die Menge an $K_2SO_4$-Kristallisat beträgt 12,1 kg. Das Kristallisat ist wie folgt zusammengesetzt: 98,84 Gew.-% $K_2SO_4$, 0,99 Gew.-% KCl, Rest Wasser. Die Ausbeute von 11,96 kg $K_2SO_4$ entspricht 39,4 % der ursprünglich im Teilstrom der Dünnsole enthaltenen $K_2SO_4$-Menge.

Beispiel 3 demonstriert, daß sich das $K_2SO_4$ in sehr reiner Form und gleichzeitig hoher Ausbeute aus der Dünnsole ausschleusen läßt.

**Patentansprüche**

1. Verfahren zur Elektrolyse einer wäßrigen Kaliumchlorid-Lösung,
dadurch gekennzeichnet,
daß die Sulfat-Ionen aus der wäßrigen Kaliumchlorid-Lösung durch Fällung als Kaliumsulfat und/oder als Kaliumsulfat-haltiges Salzgemisch und/oder als Kaliumsulfat-haltige Verbindung entfernt werden, wobei die Sulfat-Ionen durch Erhöhung der Hydroxid-Ionen- und/oder Carbonat-Ionen-Konzentration oder durch Erhöhung der Hydrogencarbonat-Ionen-Konzentration oder der Hydrogencarbonat-Ionen- und Carbonat-Ionen-Konzentration entfernt werden.

2. Verfahren nach Anspruch 1,
dadurch gekennzeichnet,
daß die Sulfat-Ionen aus der wäßrigen Kaliumchlorid-Lösung durch Zugabe von Kaliumhydroxid und/oder Kaliumcarbonat entfernt werden.

3. Verfahren nach Anspruch 1,
dadurch gekennzeichnet,
daß die Sulfat-Ionen aus der wäßrigen Kaliumchlorid-Lösung durch Zugabe von Kaliumhydrogencarbonat oder von einem Gemisch aus Kaliumhydrogencarbonat und Kaliumcarbonat entfernt werden.

4. Verfahren nach den Ansprüchen 1 bis 3,
dadurch gekennzeichnet,
daß die Fällung des Kaliumsulfats und/oder Kaliumsulfat-haltigen Salzgemisches und/oder der Kaliumsulfat-haltigen Verbindung durch Zugabe noch zusätzlicher Fällungsmittel unterstützt wird.

5. Verfahren nach Anspruch 4,
dadurch gekennzeichnet,
daß als noch zusätzliches Fällungsmittel Calciumchlorid zugegeben wird.

6. Verfahren nach den Ansprüchen 1 bis 5,
dadurch gekennzeichnet,
daß bei der Fällung Kaliumsulfat-Impfkristalle zugesetzt werden.

7. Verfahren nach den Ansprüchen 1 bis 6,
dadurch gekennzeichnet,
daß die Temperatur der wäßrigen Kaliumchlorid-Lösung bei der Ansfällung von Kaliumsulfat und/oder des Kaliumsulfat-haltigen Salzgemisches und/oder der Kaliumsulfat-haltigen Verbindung über der Sättigungstemperatur von Kaliumchlorid liegt.

8. Verfahren nach den Ansprüchen 1 bis 7,
dadurch gekennzeichnet
daß die Sulfat-Ionen durch Fallung als Kaliumsulfat und/oder als Kaliumsulfathaltiges Salzgemisch und/oder als Kaliumsulfat-haltige Verbindung aus der Dünnsole entfernt werden.

9. Verfahren nach Anspruch 8,
dadurch gekennzeichnet,
daß die Sulfat-Ionen aus einem Teilstrom der Dünnsole entfernt werden.

10. Verfahren nach Anspruch 9,
dadurch gekennzeichnet,
daß das Mengenverhältnis von dem in der Lösung enthaltenen Kaliumchlorid zu dem zuzusetzenden Kaliumhydroxid 8 : 1 bis 2 : 1 betragt.

11. Verfahren nach den Ansprüchen 1 bis 10,
dadurch gekennzeichnet,
daß die Elektrolyse von Kaliumchlorid nach dem Amalgam-Verfahren oder Diaphragmaverfahren oder Membranverfahren durchgeführt wird.

**Claims**

1. A method for the electrolysis of an aqueous potassium chloride solution, characterized in that the sulphate ions are removed from the aqueous potassium chloride solution by precipitation as potassium sulphate and/or as potassium sulphate-containing salt mixture and/or as potassium sulphate-containing compound, the sulphate ions being removed by increasing the hydroxide ion and/or carbonate ion concentration or by increasing the hydrogen carbonate ion or the hydrogen carbonate and carbonate ion concentration.

2. A method according to claim 1, characterized in that the sulphate ions are removed from the aqueous potassium chloride solution by the addition of potassium hydroxide and/or potassium carbonate.

3. A method according to claim 1, characterized in that the sulphate ions are removed from the aqueous potassium chloride solution by the addition of potassium hydrogen carbonate or a mixture of potassium hydrogen carbonate and potassium carbonate.

4. A method according to any of claims 1 to 3, characterized in that the precipitation of the potassium sulphate and/or potassium sulphate-containing salt mixture and/or the potassium sulphate-containing compound is assisted by the addition of further additional precipitants.

5. A method according to claim 4, characterized in that the further additional precipitant added is calcium chloride.

6. A method according to any of claims 1 to 5, characterized in that the precipitation involves the addition of potassium sulphate seed crystals.

7. A method according to any of claims 1 to 6, characterized in that the temperature of the aqueous potassium chloride solution during the precipitation of potassium sulphate and/or the potassium sulphate-containing salt mixture and/or the potassium sulphate-containing compound is above the saturation temperature of potassium chloride.

8. A method according to any of claims 1 to 7, characterized in that the sulphate ions are removed by precipitation as potassium sulphate and/or as potassium sulphate-containing salt mixture and/or as potassium sulphate-containing compound from the thin brine.

9. A method according to claim 8, characterized in that the sulphate ions are removed from a branch stream of the thin brine.

10. A method according to claim 9, characterized in that the proportion of the potassium chloride contained in the solution to the potassium hydroxide to be added is from 8 : 1 to 2 : 1.

11. A method according to any of claims 1 to 10, characterized in that the electrolysis of potassium chloride is carried out according to the amalgam process or diaphragm process or membrane process.

## Revendications

1. Procédé d'électrolyse d'une solution aqueuse de chlorure de potassium,
caractérisé en ce qu'
on élimine les ions sulfate de la solution aqueuse de chlorure de potassium par précipitation sous forme de sulfate de potassium et/ou sous forme de mélange de sels contenant du sulfate de potassium et/ou sous forme de composé contenant du sulfate de potassium, dans lequel on élimine les ions sulfate en élevant la concentration en ions hydroxyde et/ou en ions carbonate par un accroissement de la concentration en ions bicarbonate et de la concentration en ions carbonate.

2. Procédé selon la revendication 1,
caractérisé en ce qu'
on élimine les ions sulfate de la solution aqueuse de chlorure de potassium par addition d'hydroxyde de potassium et/ou de carbonate de potassium.

3. Procédé selon la revendication 1,
caractérisé en ce qu'

on élimine les ions sulfate de la solution aqueuse de chlorure de potassium par addition de carbonate acide de potassium ou d'un mélange de carbonate acide de potassium et de carbonate de potassium.

4. Procédé selon les revendications 1 à 3,
caractérisé en ce qu'
on favorise la précipitation du sulfate de potassium et/ou du mélange de sels contenant du sulfate de potassium et/ou du composé contenant du sulfate de potassium par addition d'une quantité supplémentaire d'agent de précipitation.

5. Procédé selon la revendication 4,
caractérisé en ce qu'
on ajoute encore une quantité supplémentaire d'agent de précipitation chlorure de calcium.

6. Procédé selon les revendications 1 à 5,
caractérisé en ce qu'
on ajoute lors de la précipitation des cristaux d'ensemencement de sulfate de potassium.

7. Procédé selon les revendications 1 à 6,
caractérisé en ce que
la température de la solution aqueuse de chlorure de potassium lors de la précipitation du sulfate de potassium et/ou du mélange de sels contenant du sulfate de potassium et/ou du composé contenant du sulfate de potassium se situe au-dessus de la température de saturation du chlorure de potassium.

8. Procédé selon les revendications 1 à 7,
caractérisé en ce qu'
on élimine les ions sulfate par précipitation sous forme de sulfate de potassium et/ou de mélange de sels contenant du sulfate de potassium et/ou de composé contenant du sulfate de potassium à partir de la saumure claire.

9. Procédé selon la revendication 8,
caractérisé en ce qu'
on élimine les ions sulfate à partir d'un courant partiel de la saumure claire.

10. Procédé selon la revendication 9,
caractérisé en ce que
le rapport quantitatif du chlorure de potassium contenu dans la solution à l'hydroxyde de potassium à ajouter s'élève à 8:1 à 2:1.

11. Procédé selon les revendications 1 à 10,
caractérisé en ce qu'on effectue l'électrolyse du chlorure de potassium selon le procédé de l'amalgame, le procédé du diaphragme ou le procédé de la membrane.

Abb. 1

**Abb. 2**